# EUROPEAN PATENT SPECIFICATION

(11) **EP 2 014 550 B1**
(45) Date of publication and mention of the grant of the patent: **21.08.2013**
(21) Application number: 08252389.5
(22) Date of filing: 14.07.2008
(51) Int. Cl.: B64D 27/10, B64D 29/00, B64D 31/00

(54) **Apparatus having inlet-mounted engine controls**
Vorrichtung mit an der Eintrittsöffnung montierten Motorsteuerungen
Appareil disposant de contrôles de moteur montés à l'admission

(30) Priority: 13.07.2007 US 777483
(43) Date of publication of application: 14.01.2009
(73) Proprietor: United Technologies Corporation, Hartford, CT 06101 (US)
(72) Inventor: Cloft, Thomas G., Glastonbury, CT 06033 (US)
(74) Representative: Tomlinson, Kerry John

(56) References cited:
- EP-A2- 1 627 990
- FR-A1- 2 857 650
- US-A- 5 000 399
- US-A1- 2002 061 110
- US-B1- 6 655 632

## Description

### BACKGROUND

### Technical Field

The invention generally relates to gas turbine engines.

### Description of the Related Art

Modern gas turbine engines typically incorporate an Electronic Engine Control (EEC), also referred to as a Full Authority Digital Engine Control (FADEC), for controlling engine functions. In this regard, an EEC functions as a primary interface between the gas turbine engine and an aircraft to which the engine is attached. By way of example, an EEC can receive thrust commands from thrust lever resolvers and can alter operating parameters of the engine responsive to those thrust commands.

Oftentimes, an EEC is configured as a line replaceable unit (LRU) that can be removed from an aircraft and replaced by ground maintenance personnel. Access to an EEC, such as for removal and replacement, typically is provided by an access panel that is located on the engine nacelle. Notably, such an EEC typically is mounted to the engine fan case aft of a fan blade containment zone for turbofan engines. This typical arrangement is disclosed in FR 2857650 A1.

### SUMMARY

The invention provides an apparatus comprising a nacelle having an inlet for defining a gas flow path for intake air of a gas turbine engine; a forward keep out zone defined by converging inner and outer walls of the nacelle inlet; an aft keep out zone defined by a fan blade containment zone; and an electronic engine control (EEC), characterised in that at least a portion of the electronic engine control is located between the forward keep out zone and the aft keep out zone, and between the inner and outer walls of the nacelle.

Other systems, methods, features and/or advantages of this disclosure will be or may become apparent to one with skill in the art upon examination of the following drawings and detailed description

### BRIEF DESCRIPTION OF THE DRAWINGS

Many aspects of the disclosure can be better understood with reference to the following drawings. The components in the drawings are not necessarily to scale. Moreover, in the drawings, like reference numerals designate corresponding parts throughout the several views.
FIG. 1 is a schematic diagram depicting a prior art mounting location of an EEC.
FIG. 2 is a schematic diagram of an embodiment of an apparatus having an inlet-mounted engine control.
FIG. 3 is a schematic diagram depicting a prior art mounting location and configuration of an EEC.
FIG. 4 is a schematic diagram depicting another embodiment of an apparatus having an inlet-mounted engine control.

### DETAILED DESCRIPTION

Systems having inlet-mounted engine controls are provided. In this regard, several embodiments will be described in which a component involved in engine control, i.e., an Electronic Engine Control (EEC), is mounted within an inlet portion of a nacelle that is used to mount a gas turbine engine.

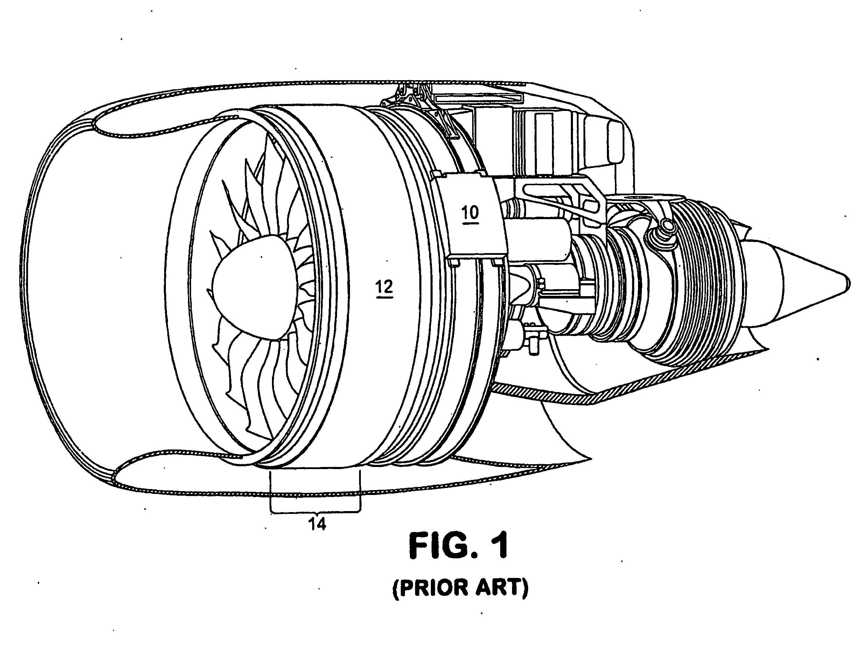

Reference is now made to the schematic diagram of FIG. 1, in which an EEC is mounted as is typically known in the prior art. Specifically, the EEC 10 is mounted to a fan case 12 aft of a fan containment zone 14. Mounting of an EEC in this matter typically is accomplished to provide ground maintenance personnel with access to the EEC via a nacelle door (not shown). Locating the EEC aft of the fan containment zone also potentially prevents damage to the EEC due to catastrophic failure of the blades of the fan. Notably, even though the fan containment zone is designed to prevent radial departure of a liberated fan blade outside the zone, deformation of the material forming the containment zone can occur. Therefore, during catastrophic failure, damage to the EEC could potentially occur. However, locating the EEC aft of the fan containment zone potentially alleviates this concern.

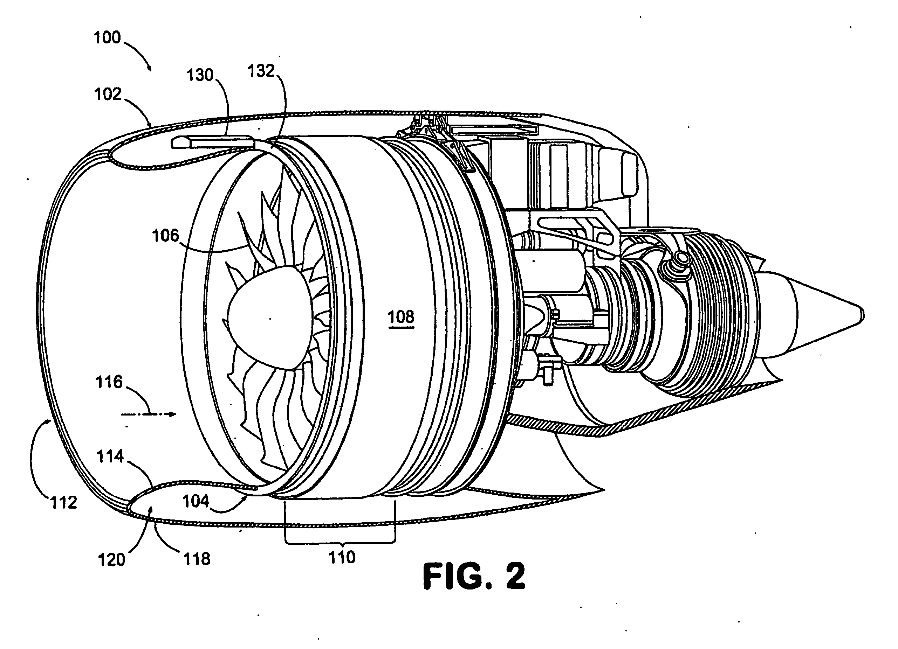

An embodiment of an apparatus having an inlet-mounted engine control is depicted schematically in FIG. 2. As shown in FIG. 2, apparatus 100 includes a nacelle 102 that mounts a gas turbine engine 104. In this embodiment, the gas turbine engine is a turbofan engine incorporating a fan 106 that is surrounded by a fan case 108. Notably, the fan case includes a designated fan containment zone 110 that is designed to prevent radial departure of a liberated fan blade outside the zone.

Nacelle 102 includes an inlet 112 for the gas turbine engine. Specifically, the inlet incorporates an inner (radially-innermost) wall 114, which defines a gas flow path 116 to the gas turbine engine, and an outer (radially-outermost) wall 118, which defines an exterior of nacelle. A cavity 120, which defines an annular volume about the gas flow path, is formed between the inner wall 114 and the outer wall 118. The inner wall 114 and outer wall 118 converge to form a leading edge of the inlet 112, the annular volume is aft of the leading edge, and the annular volume is further defined by an aft keep out zone corresponding to the fan containment zone.

In the embodiment of FIG. 2, an electronic engine control 130 EEC) is mounted within cavity 120. In particular, EEC 130 is mounted to a front flange 132 of the fan case 108 such that at least a portion of the EEC 130 is located forward of the fan containment zone. Note that, in this embodiment, the entire EEC 130 is located forward of the fan containment zone and between the inner and outer walls of the nacelle.

Various mounting techniques, such as those involving brackets, can be used to mount the component to the fan case. In other embodiments, an electronic engine control could be mounted within an inlet cavity without being attached to the fan case.

Placement of an engine control component in an inlet may tend to reduce vibrations experienced by the engine control component. This is because the inlet is more distant from the source of vibration of the gas turbine engine than conventional mounting locations, which are located aft of the fan containment zone. Additionally, availability of unoccupied volume of the inlet may improve cable routing considerations, for example.

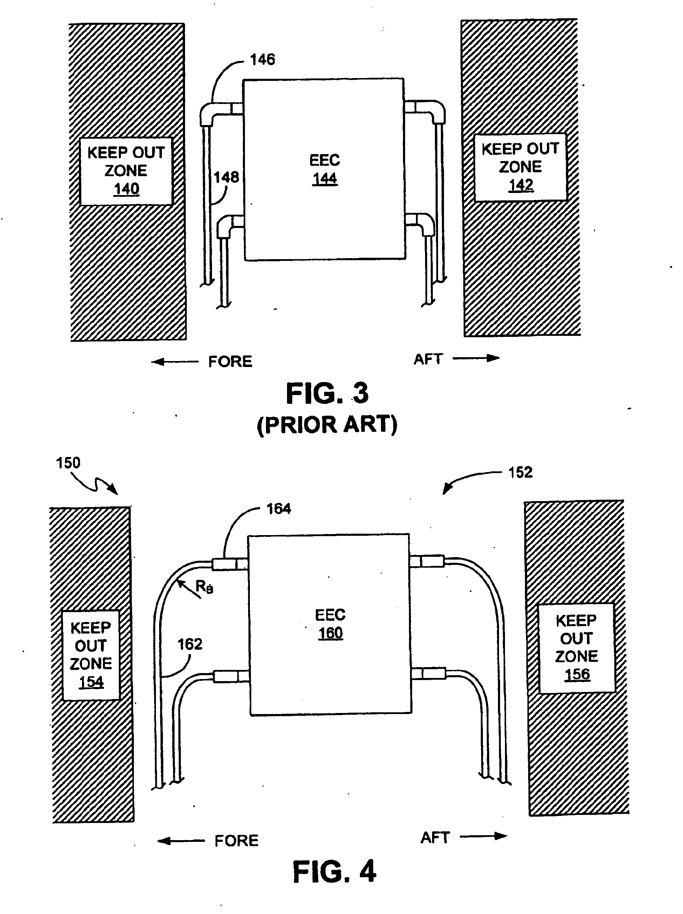

In this regard, a prior art cable-routing configuration is depicted schematically in FIG. 3. As shown in FIG. 3, the forward Keep Out Zone 140 corresponds to a fan containment zone, whereas the aft Keep Out Zone 142 corresponds to a hot section zone in which an engine control component should not be located due to temperature considerations. Notably, the volume defined between the zones 140, 142 is rather restrictive. Specifically, placement of EEC 144 between the zones 140, 142 requires the use of angled electrical connectors, e.g., connector 146. In this case, the connectors are 90-degree connectors that enable electrical cables, e.g., cable 148, to be routed between the zones and attached to the EEC.

In contrast, another embodiment of an apparatus having an inlet-mounted engine control electronic is depicted schematically in FIG. 4. As shown in FIG. 4, apparatus 150 incorporates a volume 152 in which an electronic engine control is located. Notably, the volume is much larger than that depicted in FIG. 3. Specifically, the volume 152 is defined by a forward Keep Out Zone 154, which corresponds to an interior barrier of the inlet formed by the converging inner and outer walls of the nacelle, and an aft Keep Out Zone 156, which corresponds to the fan containment zone. The entirety of the EEC is located between the forward keep out zone 154 and the aft keep out zone 156.

Mounting of an engine control component, e.g., EEC 160, within volume 152 may make it possible to use straight electrical connectors. For example, cable 162 is connected to the EEC 160 by a straight connector 164. This configuration is possible due to the increased available volume for mounting the component with cable runs that exhibit increased bend radii RB. Such cable runs may be more durable than cable runs that use angled connectors, as angled connectors tend to impose more stress on the cables.

It should be emphasized that the above-described embodiments are merely possible examples of implementations set forth for a clear understanding of the principles of this disclosure. Many variations and modifications may be made to the above-described embodiments without departing substantially from the invention. By way of example, although the above-described embodiments involve the use of turbofan engines, other types of gas turbine engines could be used. All such modifications and variations are intended to be included herein within the scope of the invention, which is defined by the accompanying claims.

## Claims

1. Apparatus (100;150) comprising a nacelle (102) having an inlet (112) for defining a gas flow path for intake air of a gas turbine engine;
a forward keep out zone (154) defined by converging inner (114) and outer (118) walls of the nacelle inlet (112);
an aft keep out zone (156) defined by a fan blade containment zone (110); and
an electronic engine control (130;160), **characterised in that** at least a portion of the electronic engine control is located between the forward keep out zone and the aft keep out zone, and between the inner and outer walls of the nacelle.

2. The apparatus of claim 1, wherein the inner wall (114) and outer wall (118) converge to form a leading edge of the inlet (112).

3. The apparatus of claim 1 or 2, wherein:
the apparatus further comprises a fan casing (108); and
the electronic engine control (130;160) is mounted to the fan casing.

4. The apparatus of claim 3, wherein:
the fan casing (108) has a forward flange (132); and
the electronic engine control (130;160) is attached to the forward flange of the fan casing.

5. The apparatus of claim 1, 2, 3 or 4 wherein:
the apparatus further comprises an electrical cable.(162) having a straight connector (164) attached thereto; and
the electrical cable is attached to the electronic engine control (130;160) by the straight electrical connector.

6. The apparatus of any preceding claim, further comprising:
a gas turbine engine (104) mounted to the nacelle.

7. The apparatus of claim 6, wherein the gas turbine engine is a turbofan.

8. The apparatus of any preceding claim, wherein an entirety of the electronic engine control is located between the forward keep out zone and the aft keep out zone.

9. The apparatus of any preceding claim, wherein an entirety of the electronic engine control is located between the inner and outer walls of the nacelle.

## Patentansprüche

1. Vorrichtung (100; 150), aufweisend:
eine Gondel (102), die einen Einlass (112) zum Bilden eines Gasströmungsweges für Ansaugluft eines Gasturbinentriebwerks aufweist;
eine vordere Fernhaltezone (154), die durch konvergierende innere (114) und äußere (118) Wände des Gondel-Einlasses (112) gebildet ist;
eine hintere Fernhaltezone (156), die durch eine Bläserschaufel-Aufnahmezone (110) gebildet ist; und
eine elektronische Triebwerkssteuerung (130; 160),
**dadurch gekennzeichnet,**
**dass** sich zumindest ein Teil der elektronischen Triebwerkssteuerung zwischen der vorderen Fernhaltezone und der hinteren Fernhaltezone sowie zwischen der inneren und äußeren Wand der Gondel befindet.

2. Vorrichtung nach Anspruch 1,
wobei die innere Wand (114) und die äußere Wand (118) unter Bildung einer Vorderkante des Einlasses (112) konvergieren.

3. Vorrichtung nach Anspruch 1 oder 2,
wobei die Vorrichtung ferner ein Bläsergehäuse (108) aufweist; und wobei die elektronische Triebwerkssteuerung (130; 160) an dem Bläsergehäuse angebracht ist.

4. Vorrichtung nach Anspruch 3,
wobei das Bläsergehäuse (108) einen vorderen Flansch (132) aufweist; und
wobei die elektronische Triebwerkssteuerung (130; 160) an dem vorderen Flansch des Bläsergehäuses befestigt ist.

5. Vorrichtung nach Anspruch 1, 2, 3 oder 4,
wobei die Vorrichtung ferner ein elektrisches Kabel (162) aufweist, an dem ein gerader Verbinder (164) angebracht ist; und
wobei das elektrische Kabel an der elektronischen Triebwerkssteuerung (130; 160) mittels des geraden elektrischen Verbinders angebracht ist.

6. Vorrichtung nach einem der vorausgehenden Ansprüche, weiterhin aufweisend:
ein an der Gondel befestigtes Gasturbinentriebwerk (104).

7. Vorrichtung nach Anspruch 6,
wobei das Gasturbinentriebwerk ein Turbobläser ist.

8. Vorrichtung nach einem der vorausgehenden Ansprüche, wobei sich die Gesamtheit der elektronischen Triebwerkssteuerung zwischen der vorderen Fernhaltezone und der hinteren Fernhaltezone befindet.

9. Vorrichtung nach einem der vorausgehenden Ansprüche, wobei sich die Gesamtheit der elektronischen Triebwerkssteuerung zwischen der inneren und der äußeren Wand der Gondel befindet.

## Revendications

1. Appareil (100 ; 150) comprenant une nacelle (102) ayant une entrée (112) pour définir un trajet d'écoulement de gaz pour de l'air d'admission d'un moteur à turbine à gaz ;
une zone d'exclusion avant (154) définie par les parois convergentes interne (114) et externe (118) de l'entrée (112) de la nacelle ;
une zone d'exclusion arrière (156) définie par une zone (110) confinant les aubes de la soufflante ; et
une commande de moteur électronique (130 ; 160) **caractérisé en ce qu'**au moins une portion de la commande de moteur électronique est située entre la zone d'exclusion avant et la zone d'exclusion arrière et entre les parois interne et externe de la nacelle.

2. Appareil selon la revendication 1, dans lequel la paroi interne (114) et la paroi externe (118) convergent pour former un bord d'attaque de l'entrée (112).

3. Appareil selon la revendication 1 ou la revendication 2, dans lequel :
l'appareil comprend par ailleurs un boîtier de soufflante (108) ; et
la commande de moteur électronique (130 ; 160) est montée sur le boîtier de la soufflante.

4. Appareil selon la revendication 3, dans lequel :
le boîtier de soufflante (108) a une bride avant (132) ; et
la commande de moteur électronique (130 ; 160) est fixée à la bride avant du boîtier de la soufflante.

5. Appareil selon la revendication 1, 2, 3 ou 4, dans lequel :
l'appareil comprend en outre un câble électrique (162) ayant un connecteur droit (164) qui lui est fixé ; et
le câble électrique est fixé à la commande de moteur électronique (130 ; 160) par le connecteur électrique droit.

6. Appareil selon l'une quelconque des revendications précédentes, comprenant par ailleurs :
un moteur à turbine à gaz (104) monté sur la nacelle.

7. Appareil selon la revendication 6, dans lequel le moteur à turbine à gaz est un réacteur à double flux.

8. Appareil selon l'une quelconque des revendications précédentes, dans lequel la totalité de la commande de moteur électronique est située entre la zone d'exclusion avant et la zone d'exclusion arrière.

9. Appareil selon l'une quelconque des revendications précédentes, dans lequel la totalité de la commande de moteur électronique est située entre les parois interne et externe de la nacelle.
